# EUROPEAN PATENT SPECIFICATION

(11) **EP 0 323 125 B1**
(45) Date of publication and mention of the grant of the patent: **06.04.1994**
(21) Application number: 88312147.7
(22) Date of filing: 21.12.1988
(51) Int. Cl.: H01F 1/053

(54) **Rare earth permanent magnet**
Permanent-Magnet aus seltenen Erden
Aimant permanent en terre rare

(30) Priority: 28.12.1987 JP 335441/87
(43) Date of publication of application: 05.07.1989
(73) Proprietor: Shin-Etsu Chemical Co., Ltd., Chiyoda-ku Tokyo 100 (JP)
(72) Inventor: Ohashi, Ken, Takefu-shi Fukui (JP); Osugi, Ryo, Takefu-shi Fukui (JP); Tawara, Yoshio, Fukui-shi Fukui (JP)
(74) Representative: Whalley, Kevin

(56) References cited:
- EP-A- 253 428
- EP-A- 278 342
- GB-A- 2 021 147
- JP-A-62 241 302
- JP-A-62 241 303
- US-A- 4 770 723
- O.I. Bodak, D.A. Berezjuk, Academy of Science Of Ukraine SSR, 1985, H054, p. 83-84
- APPLIED PHYSICS LETTERS, vol. 37, no. 12, December 15, 1980 (USA), J.J. Croat: "Preparation and coercitive force of melt-spun Pr-Fe alloys" pages 1096-1098
- JOURNAL OF APPLIED PHYSICS, vol. 55, no. 4, February 15, 1984, (New York, USA), A:A: Bright and Maria Ronay: "Reducing the grain size of polycristalline lead films by use of Au/n2 barriers to grain growth" pages 810-816

## Description

The present invention relates to a rare earth permanent magnet exhibiting excellent coercive force and improved electric and electronic equipment in which the magnet is used.

Conventionally, Sm,Co-containing magnets are among the most commonly used rare earth permanent magnets employed as high performance magnets in equipment, such as loud speakers, motors, actuators, and various measuring instruments. However, samarium and cobalt are relatively expensive, and when used as raw materials in mass production, become the chief barrier to attaining economical production. In an attempt to improve the economy of the process, a portion of the cobalt is replaced by iron (Fe). However, the amount of cobalt replaced cannot exceed a certain value without affecting the magnetic and other properties of the magnet. For example, in the case of an R₂Co₁₇ magnet, which is currently manufactured on a mass production scale, only 20 atomic percent of the cobalt can be replaced at best.

Recently developed Nd,Fe,B-containing magnets have received considerable attention because they exceed the Sm,Co-containing magnets in performance, and are more attractive economically since they are composed mainly of the more abundant elements, Nd and Fe (see United States Patent No.4,770,723). However, the Nd,Fe,B-containing magnets are subject to oxidation or rusting, which is a common problem with magnets containing more than a modicum of Nd. To solve this problem, it is necessary to cover or seal the magnet with a coating layer. However, no anti-corrosion method has yet proved successful, especially when applied in a mass production line. This unsolved problem has kept Nd,Fe,B-containing magnets from being widely used.

Studies have been made with a view to developing a compound wherein the ratio of rare earth to transition metals (R/M) is 1/10 or smaller, and is a ternary compound having a composition differing from R₂Fe₁₄B. However, sufficiently effective materials for magnetic use have not been developed since the increase in the ratio of transition metals in the former case, and the departure from the composition of R₂Fe₁₄B in the latter case both result in a decrease in the Curie point and lowering in the degree of magnetic anisotropy.

Binary compounds of an R-Fe composition, such as RFe₂ , RFe₃ , and R₂Fe₁₇ are well known. However, these are not appropriate materials to make permanent magnets because they are poor in at least one of the following properties: Curie point (Tc), saturation magnetization (4πMs), and constant of magnetic anisotropy (Ku).

In order to improve the poor properties of these binary compounds, Croat and co-workers rapidly quenched some binary compounds by a melt spinning method whereby they quenched and magnetized the metastable phase of the compounds (Appl. Phys. Lett., 37, 1096, 1981). Cadieu and co-workers showed that it is possible to obtain SmFe₅ and (SmTi)Fe₅ in the form of a thin film by sputtering (J. Appl. Phys., 55, 811, 1984). However, the resultant film was composed mostly of the metastable phase caused by sputtering, and it was thought that those compounds could not exist in a bulky form. These researchers reported that the thin film was of a hexagonal system. Being isotropic, these magnets are poor in magnetic properties and, since the properties are attributable to the metastable phase, their stability is doubtful. Because of these shortcomings of the known materials, a new magnet is needed which has good magnetic properties, especially high coercive force and corrosion resistance, and can be obtained at low cost.

EP-A-0253428 discloses a hard magnetic material having an intermetallic compound of tetragonal crystal structure of the ThMn₁₂ type. The intermetallic compound contains:
a rare earth metal from the group Sm, Er, Tm, Fe, Co or a mixture of the two, and
Ti, V, Cr or Si.

EP-A-0278342 discloses an iron containing magnetic material having a ThMn₁₂ structure. The material contains:
Fe,
a rare earth metal, and
Mo or W.

A document by O I Bodak and D A Berezjuk (vorgelegt vom Mitglied der Akademie der Wissenschaften der Ukrainischen SSR, I.N. Francevic) describes the metallurgy of materials having a main phase of body centered tetragonal structure, containing rare earth metals.

It is an object of the invention to provide a permanent magnet which has magnetic properties comparable with or better than the Sm,Co-containing magnets.

The foregoing and other objects, features and advantages of the present invention will be apparent from the following detailed description thereof.

The present invention provides a sintered type rare earth permanent magnet consisting of a hard magnetic material having a chemical composition represented by the formula:

Rₓ M_{y} Fe_{1-x-y}

wherein R represents Y and/or at least one other rare earth element, M represents at least one element selected from V, Cr, Mn, Si, W, Nb, Mo, Al and Ge, and x and y are atomic fractions such that 0.05≦x≦0.19 and 0.01≦y≦0.10;
the crystalline structure of the principal phase of the composition being ThMn₁₂ type body-centred tetragonal.

Preferred and/or optional features of the invention are set forth in Claims 2 to 9.

A sintered type rare earth permanent magnet according to the invention may be prepared by a method comprising the steps of
a) melting the components of the composition together;
b) cooling and pulverizing the melt to form a powder of particle size 1 to 10µm, preferably 3 to 5µm;
c) aligning the powder in a magnetic field and then molding the powder under pressure to form a compact;
d) sintering the compact in an inert gas or vacuum at a temperature between 1000 and 1300°C;
e) heat treating the sintered compact at a temperature between 400 and 900°C for at least 1 hour; and
f) quenching the sintered compact after the heat treatment.

Preferably, R represents Sm or a mixture of rare earth elements including Sm. Also, x is preferably a fraction such that 0,07≦x≦0.19, and y such that 0.05≦y≦0.10.

More specifically, the proposed rare earth permanent magnet of the invention is a ternary alloy having the composition R-M-Fe wherein R is Y or a rare earth element selected from the groups consisting of La, Ce, Pr, Nd, Sm, Eu, Gd, Tb, Dy, Ho, Er, Tm, Yb, Lu and mixtures of two or more of these rare earth elements. M is an element selected from the group consisting of V, Cr, Mn, Si, w, Al, Mo, Nb, Ta, Zr, Hf, Ge, Sn and mixtures of two or more of these elements. It is preferable, however, that M is Si, Cr, or V or a mixture of two or all of these elements.
Fig. 1 is a view of a model of ThMn₁₂ type body-centred tetragonal structure;
Fig. 2 is a chart showing powder X-ray diffraction of a ThMn₁₂ structure; and
Fig. 3 is a chart showing powder X-ray diffraction of a Sm,Si,Fe-containing compound of ThMn₁₂ type structure.

The inventors, when investigating in the properties of various ternary compounds of R-M-Fe composition, had previously found that if M is Ti, a ternary compound RTiₓFe₁₂₋ₓ of body-centred tetragonal ThMn₁₂ structure can exist (Japanese Kokai Nos. 62-241302, 62-241303, and 62-241304). It was also found that the temperature-dependence of magnetization of the ternary compound is similar to that of a single phase material. Thereupon, the inventors discovered the existence of compounds having the body-centred tetragonal ThMn₁₂ structure where M is an element other than Ti or a mixture containing or not containing Ti.

If the atomic fraction x of R falls outside the prescribed range, the body-centered tetragonal ThMn₁₂ structure loses its stability. As a result, when, for example, x is smaller than 0. 05, the coercive force (iHc) becomes greatly reduced, and when x exceeds 0.19 the saturation magnetization (4πIs) becomes very poor. Therefore, the rare earth content should be carefully controlled. Also, the atomic fraction y of transition metal(s) M requires careful control. If it falls outside the prescribed range, the body-centered tetragonal ThMn₁₂ structure loses its stability. For example, when y exceeds 0.10, the relative amount of tetragonal structure decreases thereby increasing the instability of the ThMn₁₂ structure.

The rare earth permanent magnet according to the invention is obtained from a metallic compound having the prescribed composition by means of a known powder metallurgy method where the metallic compound is melted, forged, pulverized, compacted in a magnetic field, and sintered. More specifically, a rare earth metal, a transition metal and iron are melted together in an inert gas or in a vacuum by an induction furnace. The melt is poured and cooled in a water-cooled mold of copper and pulverized at the room temperature by a nitrogen gas jet mill to a particle size in range from 1 to 10µm, preferably from 3 to 5 µm. The powder is aligned in a static magnet field of 10 to 15 kOe, and molded by compression under a pressure of 1.0 to 1.5 t/cm² . The compact is sintered in an inert gas or a vacuum at a temperature between 1000 and 1300 °C, preferably between 1020 and 1150°C, for one to three hours, and heat-treated at a temperature between 400 °C and 900 °C for one hour or longer, and then quenched.

The rare earth permanent magnet according to the invention is a magnet mainly comprising a compound having a stable crystal structure of the type body-centred tetragonal ThMn₁₂, the stability being due to the M component. Compared with the binary R₂Fe₁₇ compounds, the magnet of the invention if far superior in magnetic properties, such as Curie point and saturation magnetization. Also, since the powder metallurgy method enables manufacture of an anisotropic magnet, a magnet as good as or better than Sm,Co-containing magnets can be obtained which is economically manufactured since it contains no cobalt.

In the case of Nd,Fe,B-containing magnets however, when the powder metallurgy method is used, the magnetic properties undergo sharp degradation due to the sudden oxidation characteristic of a fine powder containing iron. Furthermore, the surfaces of the sintered body are liable to rust unless they are properly coated with a corrosion resistive material. In contrast, while the inventive rare earth magnets are composed mainly of iron, they are highly corrosion resistant as manufactured and, under normal conditions, can be used without being coated. However, if long life without corrosion is especially desired, the magnets of the invention may be coated with a resin, e.g., by spraying or electrodeposition, or by physical vapor deposition, e.g., by sputtering, ion plating, or with electro-plating.

The melt spinning produces a highly coercive ribbon of the magnet of the invention, which may be pulverized and processed to form an isotropic plastic magnet. Also, an anisotropic sintered body of the inventive magnet may be pulverized and processed to form an anisotropic plastic magnet.

Further, according to the invention, by admixing the R-Fe mixture with a predetermined amount of component M, it is possible to obtain a stabilized tetragonal compound which has hitherto been unknown. Accordingly, a rare earth permanent magnet containing no Co is obtained which has magnetic properties comparable to Sm,Co-containing magnets.

The following examples illustrate the invention:

### Example 1

Rare earth (R) metal(s) (99.0 % pure), a transition (M) metal (99.9 % pure), and iron (Fe) were combined in varying compositions as shown in Table 1. The resulting mixtures were melted under an inert gas in an induction furnace and the melted intermetallic compounds were cooled in a copper mold to obtain ingot samples. Each ingot was roughly ground and then pulverized by a nitrogen gas jet mill until the particle size was 3 - 5µm. The thus pulverized powder was aligned in a static magnetic field of 15 kOe and molded by compression under a pressure of 1 t/cm². The compact was then sintered in an inert gas at a temperature between 1050°C and 1250 °C for one to two hours, and heat-treated at a temperature between 500 °C and 900°C for one hour or slightly longer, and finally quenched. The coercive force (iHc) of each sintered compact was measured with an autographic fluxmeter. The results are tabulated in Table 1.

The results show that the coercive forces of Samples Nos. 1, 2, 3, and 4, whose compositions are within the scope of the invention, are good enough.

### Example 2

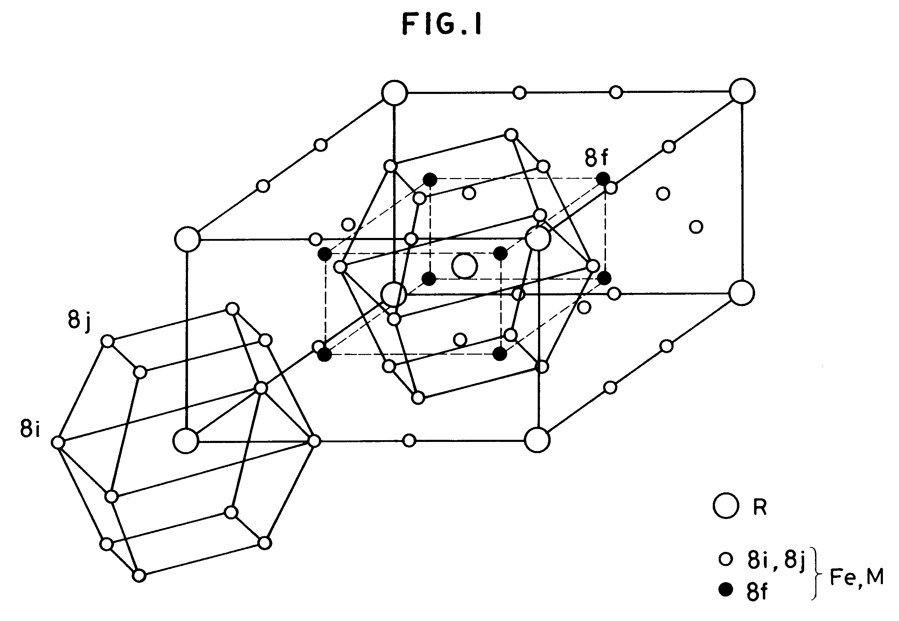

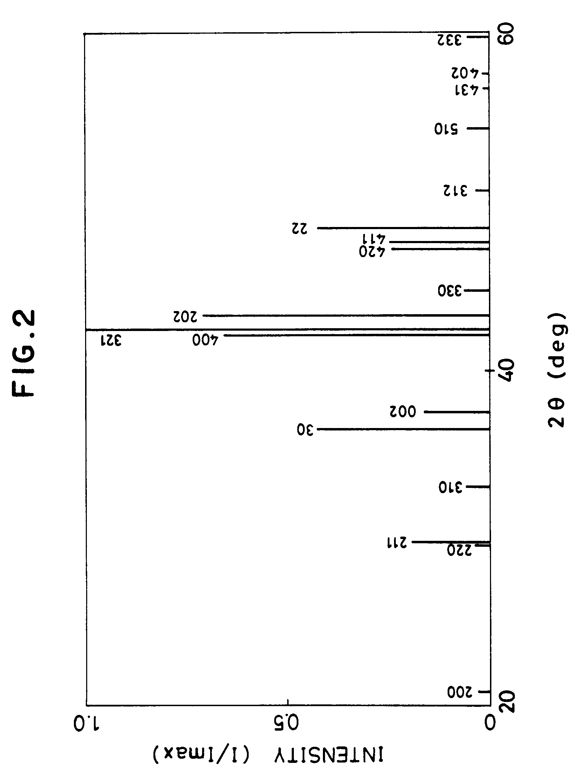

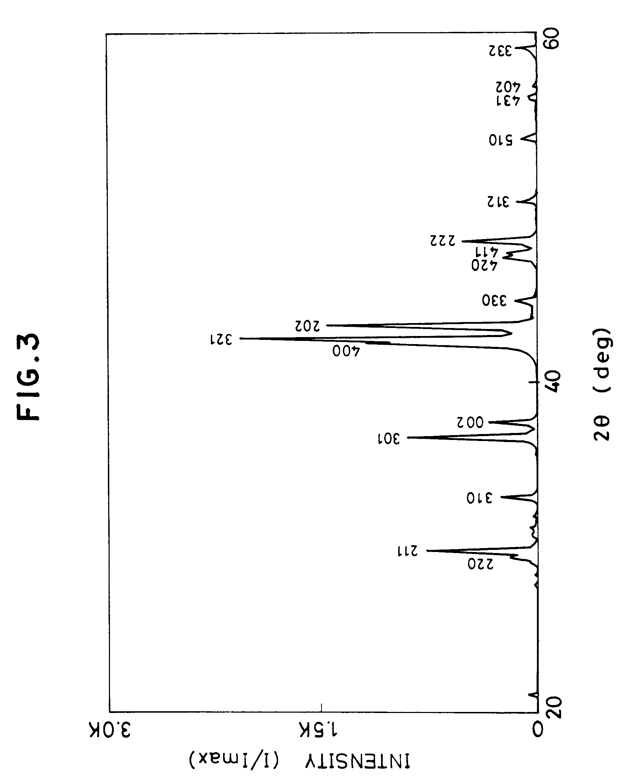

Samarium, transition metal (99.9 %), and iron were combined in varying compositions as shown in Table 2 (sample Nos. 8 - 12), and five ingot samples were made from them in the same manner as described in Example 1. These ingots were melted and the melt was spun into a ribbon form by quenching with a copper single roll in an inert gas atmosphere. Specifically, the melt was ejected at an ejection pressure of 1.2 atm onto the copper single roll spinning at a peripheral speed of 2 m/sec to 30 m/sec in an argon gas atmosphere of 1 atm so that the melt is instantaneously quenched on the periphery of the roll. The coercive force (iHc) of the ribbon was measured with a VSM (vibrating sample magnetometer). The measurement showed that there was little difference between the coercive force taken in the direction of the ribbon thickness and that taken in the direction parallel to the ribbon surface, and therefore it was found that the magnet was isotropic. The result of the measurement is shown in Table 2. The main phase of the ribbon magnet was of ThMn₁₂ structure (Fig. 1) and a modicum of Sm₂Fe₁₇ and Fe phases were found in the magnet. In contrast to this, an X-ray diffraction and analysis of a thermomagnetic curve showed that the Sm-Fe ribbon of the Comparative Example was not of the ThMn₁₂ structure (the powder X-ray diffraction of ThMn₁₂ structure is shown in Fig. 2) but was a mixture of Fe phase and Sm₂Fe₁₇ phase (the powder X-ray diffraction of a Sm,Si,Fe= containing compound of ThMn₁₂ structure is shown in Fig. 3). The coercive force of the Comparative Example was only 0.4 kOe.

It has been found that the efficiency of the motors, actuators, etc. used in peripheral equipment of computers, in audio system, or motors for automobiles is improved after they incorporated the rare earth permanent magnets of the invention.

**Table 1**

| Sample No. | R (at%) | | M (at%) | | Fe (at%) | iHc (kOe) |
|---|---|---|---|---|---|---|
| 1 | Sm | 7.0 | Si | 7.0 | 86.0 | 9.2 |
| 2 | Sm | 8.3 | Cr | 10.0 | 81.7 | 10.8 |
| 3 | Sm | 7.7 | V | 8.5 | 83.8 | 12.5 |
| 4 | Sm | 8.5 | Cr | 10.0 | 80.5 | 7.0 |
| | Dy | 1.0 | | | | |
| 5 | Sm | 7.5 | Si | 11.4 | 78.8 | 5.5 |
| | Nd | 2.3 | | | | |
| 6 | Sm | 5.6 | V | 11.0 | 77.8 | 8.7 |
| | Y | 5.6 | | | | |
| 7 | Ce | 8.0 | Si | 6.0 | 80.5 | 6.2 |
| | | | Cr | 5.5 | | |

**Table 2**

| Sample No. | R (at%) | | M (at%) | | Fe (at%) | iHc (kOe) |
|---|---|---|---|---|---|---|
| 8 | Sm | 8.0 | Mn | 10.0 | 82.0 | 7.2 |
| 9 | Sm | 8.5 | Nb | 10.0 | 81.5 | 12.0 |
| 10 | Sm | 9.0 | Mo | 10.0 | 81.0 | 11.5 |
| 11 | Sm | 9.5 | Sn | 9.5 | 81.0 | 9.8 |
| 12 | Sm | 10.0 | Ge | 9.0 | 81.0 | 9.5 |
| Comp. Example | Sm | 7.7 | - | - | 92.3 | 0.4 |

## Claims

1. A sintered type rare earth permanent magnet consisting of a hard magnetic material having a chemical composition represented by the formula:
Rₓ M_{y} Fe_{1-x-y}
wherein R represents Y and/or at least one other rare earth element, M represents at least one element selected from V, Cr, Mn, Si, W, Nb, Mo, Al and Ge, and x and y are atomic fractions such that 0.05≦x≦0.19 and 0.01≦y≦0.10;
the crystalline structure of the principal phase of the composition being ThMn₁₂ type body-centred tetragonal.

2. A rare earth permanent magnet as claimed in Claim 1, characterized in that element M is Si, Cr, V, or a mixture of at least two of these elements.

3. A rare earth permanent magnet as claimed in Claims 1 or 2, characterized in that said rare earth metal R has a purity of at least 99 per cent.

4. A rare earth permanent magnet as claimed in any of Claims 1 to 3, characterized in that said element M has a purity of at least 99.9 per cent.

5. A rare earth permanent magnet as claimed in any of Claims 1 to 4, characterized in that R is Sm or a mixture of rare earth elements including Sm.

6. A rare earth permanent magnet as claimed in any of Claims 1 to 4, characterized in that R is Sm and M is V.

7. A rare earth permanent magnet as claimed in any of Claims 1 to 6, characterized in that x and y are atomic fractions such that 0.07≦x≦0.19 and 0.05≦y≦0.10.

8. A motor characterized by being equipped with a rare earth permanent magnet as claimed in any of Claims 1 to 7.

9. An actuator characterized by being equipped with a rare earth permanent magnet as claimed in any of Claims 1 to 7.

10. A method of forming a sintered type rare earth permanent magnet according to Claim 1, comprising the steps of
a) melting the components of the composition together;
b) cooling and pulverizing the melt to form a powder of particle size 1 - 10µm, preferably 3 - 5µm;
c) aligning the powder in a magnetic field and then molding the powder under pressure to form a compact;
d) sintering the compact in an inert gas or vacuum at a temperature between 1000 and 1300°C;
e) heat treating the sintered compact at a temperature between 400 and 900°C for at least 1 hour; and
f) quenching the sintered compact after the heat treatment.

## Patentansprüche

1. Seltene-Erden-Dauermagnet bestehend aus gesinterten Teilchen der Größe 1 bis 10 µm, wobei die Teilchen aus einem hartmagnetischen Material mit einer chemischen Zusammensetzung bestehen, welche durch folgende Formel dargestellt wird:
Rₓ M_{y} Fe_{1-x-y},
wobei R für Y und/oder mindestens ein Element der seltenen Erden steht, M für mindestens ein Element aus folgender Gruppe V, Cr, Mn, Si, W, Nb, Mo, Al und Ge steht, und x und y atomare Anteile derart sind, daß 0,05≦x≦0,19 und 0,01≦y≦0,10;
die Kristallstruktur der Hauptphase der Zusammensetzung vom raumzentrierten tetragonalen ThMn₁₂-Typ ist.

2. Seltene-Erden-Dauermagnet gemäß Anspruch 1, dadurch gekennzeichnet, daß das Element M Si, Cr, V oder eine Mischung aus mindestens zwei dieser Elemente ist.

3. Seltene-Erden-Dauermagnet gemäß Anspruch 1 oder 2, dadurch gekennzeichnet, daß das Seltene-Erden-Metall R einen Reinheitsgrad von mindestens 99 Prozent hat.

4. Seltene-Erden-Dauermagnet gemäß einem der Ansprüche 1 bis 3, dadurch gekennzeichnet, daß das Element M einen Reinheitsgrad von mindestens 99,9 Prozent hat.

5. Seltene-Erden-Dauermagnet gemäß einem der Ansprüche 1 bis 4, bei dem die Teilchen eine Größe von 3 bis 5 µm haben.

6. Seltene-Erden-Dauermagnet gemäß einem der Ansprüche 1 bis 5 dadurch gekennzeichnet, daß R Sm oder eine Sm enthaltende Mischung aus seltenen Erden ist.

7. Seltene-Erden-Dauermagnet gemäß einem der Ansprüche 1 bis 5, dadurch gekennzeichnet daß R Sm und M V ist.

8. Seltene-Erden-Dauermagnet gemäß einem der Ansprüche 1 bis 7, dadurch gekennzeichnet, daß x und y atomare Anteile derart sind, daß 0,07≦x≦0,19 und 0,05≦y≦0,10.

9. Motor, dadurch gekennzeichnet, daß er mit einem Seltene-Erden-Dauermagneten gemäß einem der Ansprüche 1 bis 8 ausgerüstet ist.

10. Betätiger, dadurch gekennzeichnet, daß er mit einem Seltene-Erden-Dauermagneten gemäß einem der Ansprüche 1 bis 8 ausgerüstet ist.

11. Verfahren zum Bilden eines Seltene-Erden-Dauermagneten des Sintertyps gemäß Anspruch 1, welches die Schritte
a) Zusammenschmelzen der Komponenten der Zusammensetzung;
b) Abkühlen und Pulverisieren der Schmelze, um ein Pulver der Teilchengröße 1-10 µm, vorzugsweise 3-5 µm, zu bilden;
c) Ausrichten des Pulvers in einem Magnetfeld und dann Formen des Pulvers unter Druck, um einen Preßling zu formen;
d) Sintern des Preßlings in einem Inertgas oder Vakuum bei einer Temperatur zwischen 1000 und 1300° C;
e) Wärmebehandlung des gesinterten Preßlings bei einer Temperatur zwischen 400 und 900° C für mindestens eine Stunde; und
f) plötzliches Abkühlen des gesinterten Preßlings nach der Wärmebehandlung
umfaßt.

## Revendications

1. Aimant permanent en terre rare constitué par des particules frittées ayant une dimension de 1 à 10 µm, les particules étant en un matériau magnétique dur ayant la composition chimique représentée par la formule :
RₓM_{y}Fe_{1-x-y}
dans laquelle R représente Y et/ou au moins un élément de terre rare, M représente au moins un élément choisi parmi V, Cr, Mn, Si, W, Nb, Mo, Al et Ge, et x et y représentent des fractions atomiques telles que 0,05 ≦ x ≦ 0,19 et 0,01 ≦ y ≦ 0,10;
la phase principale de la composition ayant une structure cristalline tétragonale centrée de type ThMn₁₂.

2. Aimant permanent en terre rare selon la revendication 1, caractérisé en ce que l'élément M représente Si, Cr, V ou un mélange d'au moins deux de ces éléments.

3. Aimant permanent en terre rare selon la revendication 1 ou 2, caractérisé en ce que ledit métal R de terre rare a une pureté d'au moins 99 pour cent.

4. Aimant permanent en terre rare selon l'une quelconque des revendications 1 à 3, caractérisé en ce que ledit élément M a une pureté d'au moins 99,9 pour cent.

5. Aimant permanent en terre rare selon l'une quelconque des revendications 1 à 4, dans lequel les particules ont une dimension de 3 à 5 µm.

6. Aimant permanent en terre rare selon l'une quelconque des revendications 1 à 5, caractérisé en ce que R représente Sm ou un mélange d'éléments de terre rare englobant Sm.

7. Aimant permanent en terre rare selon l'une quelconque des revendications 1 à 5, caractérisé en ce que R représente Sm et M représente V.

8. Aimant permanent en terre rare selon l'une quelconque des revendications 1 à 7, caractérisé en ce que x et y représentent des fractions atomiques telles que 0,07 ≦ x ≦ 0,19 et 0,05 ≦ y ≦ 0,10.

9. Moteur caractérisé par le fait qu'il est équipé d'un aimant permanent en terre rare selon l'une quelconque des revendications 1 à 8.

10. Dispositif d'entraînement caractérisé par le fait qu'il est équipé d'un aimant permanent en terre rare selon l'une quelconque des revendications 1 à 8.

11. Procédé de fabrication d'un aimant permanent en terre rare de type fritté selon la revendication 1, comprenant les étapes consistant à:
a) procéder à une fusion mutuelle des composants de la composition;
b) refroidir et pulvériser la masse fondue pour obtenir une poudre ayant une granulométrie de 1-10 µm, de préférence de 3-5 µm;
c) aligner la poudre dans un champ magnétique et ensuite, mouler la poudre sous pression pour obtenir un comprimé;
d) fritter le comprimé dans un gaz inerte ou sous vide à une température entre 1.000 et 1.300°C;
e) soumettre à un traitement thermique le comprimé fritté à une température entre 400 et 900°C pendant au moins 1 heure; et
f) soumettre le comprimé fritté à une trempe après le traitement thermique.
